# EUROPÄISCHE PATENTANMELDUNG

(11) **EP 2 650 703 A2**
(43) Veröffentlichungstag der Anmeldung: **16.10.2013**
(21) Anmeldenummer: 13163190.5
(22) Anmeldetag: 10.04.2013
(51) Int. Cl.: G02B 1/11

(54) **Verfahren zur Herstellung eines reflexionsmindernden Interferenzschichtsystems sowie reflexionsminderndes Interferenzschichtsystem**

(30) Priorität: 11.04.2012 DE 102012205869
(71) Anmelder: CARL ZEISS JENA GmbH, 07745 Jena (DE)
(72) Erfinder: Bruynooghe, Stephane, 73431 Aalen (DE); Koch, Thomas, 73460 Hüttlingen (DE); Gatto, Alexandre, 07751 Jena-Münchenroda (DE); Helgert, Michael, 07743 Jena (DE)
(74) Vertreter: Geyer, Fehners & Partner

(57) **Zusammenfassung**

Es wird ein Verfahren zur Herstellung eines reflexionsmindernden Interferenzschichtsystems bereitgestellt, bei dem ein Schichtstapel durch Aufbringen mehrerer Schichten auf eine Oberfläche eines Substrates, die abwechselnd hochbrechend und niedrigbrechend sind, gebildet wird und eine nanoporöse Abschlußschicht auf den Schichtstapel durch Aufdampfen des Materials der Abschlußschicht unter schrägem Winkel zur Normalen der obersten Schicht des Schichtstapels derart aufgebracht wird, daß die Brechzahl der Abschlußschicht kleiner ist als die Brechzahl der obersten Schicht des Schichtstapels.

## Beschreibung

Die vorliegende Erfindung betrifft ein Verfahren zur Herstellung eines reflexionsmindernden Interferenzschichtsystems sowie ein reflexionsminderndes Interferenzschichtsystem.

Es ist bekannt, zur Entspiegelung optischer Elemente ein reflexionsminderndes Interferenzschichtsystem auf die Oberflächen des Elementes aufzubringen. Es besteht jedoch der stetige Bedarf, die Entspiegelungseigenschaften des Interferenzschichtsystems weiter zu verbessern. Insbesondere wenn eine Entspiegelung über einen breiten Wellenlängenbereich gewünscht ist, sind Verbesserungen der Entspiegelungseigenschaften beispielsweise durch Erhöhung der Schichtanzahl schwierig möglich. Im übrigen führt eine Erhöhung der Anzahl der Schichten in unerwünschter Weise zu höheren Kosten.

Ausgehend hiervon ist es Aufgabe der Erfindung, ein Verfahren zur Herstellung eines reflexionsmindernden Interferenzschichtsystems bereitzustellen, mit dem ein verbessertes reflexionsminderndes Interferenzschichtsystem hergestellt werden kann. Ferner soll ein verbessertes reflexionsminderndes Interferenzschichtsystem bereitgestellt werden.

Die Aufgabe wird gelöst durch ein Verfahren zur Herstellung eines reflexionsmindernden Interferenzschichtsystems, bei dem ein Schichtstapel durch Aufbringen mehrerer Schichten auf eine Oberfläche eines Substrates, die abwechselnd hochbrechend und niedrigbrechend sind, gebildet wird und bei dem eine nanoporöse Abschlußschicht auf den Schichtstapel durch Aufdampfen des Materials der Abschlußschicht unter schrägem Winkel zur Normalen der obersten Schicht des Schichtstapels derart aufgebracht wird, daß die Brechzahl der Abschlußschicht kleiner ist als die Brechzahl der obersten Schicht des Schichtstapels.

Durch das Vorsehen einer solchen Abschlußschicht werden die Entspiegelungseigenschaften deutlich verbessert.

Die angegebenen Brechzahlen sollen in dem Wellenlängenbereich vorliegen, für den das erfindungsgemäße Interferenzschichtsystem ausgelegt ist.

Unter einer nanoporösen Abschlußschicht wird insbesondere verstanden, daß die nanoporöse Abschlußschicht Poren aufweist, deren Ausdehnung so gering ist, daß sie von der einfallenden Strahlung, für das das Interferenzschichtsystem ausgelegt ist, nicht aufgelöst werden kann. Somit weist die nanoporöse Abschlußschicht für die einfallende Strahlung eine effektive Brechzahl auf, die geringer ist als die Brechzahl des Materials zur Herstellung der nanoporösen Abschlußschicht, da in den Poren meistens Luft ist, dessen Brechzahl stets kleiner ist als die des Materials der Abschlußschicht.

Ein Beispiel eines solchen Aufdampfens unter schrägem Winkel ist das sogenannte GLAD-Verfahren (GLancing Angle Deposition), das dem Fachmann bekannt ist. Insbesondere wird hierzu beispielshalber auf Y.-P. Zhao et al., "Designing Nanostructures by Glancing Angle Deposition", Proceedings of SPIE Vol. 5219 Nanotubes and Nanowires, Seiten 59 - 73 verwiesen. Die dort beschriebenen Aufdampfverfahren werden hiermit in vollem Umfang aufgenommen und können zum Aufbringen der nanoporösen Abschlußschicht verwendet werden.

Bei dem erfindungsgemäßen Verfahren kann das Material der Abschlußschicht unter einem schrägen Winkel von mindestens 60° und kleiner als 85° aufgedampft werden.

Ferner kann der Schichtstapel während des Aufdampfens des Materials der Abschlußschicht entweder nicht bewegt oder bewegt werden.

Bei dem erfindungsgemäßen Verfahren können sowohl die Schichten des Schichtstapels als auch die Schicht der Abschlußschicht aus nicht-organischen Materialien gebildet werden.

Insbesondere kann die Abschlußschicht mit einer Schichtdicke im Bereich von 30 - 200 nm, bevorzugt von 50 - 150 nm gebildet werden. Ferner kann die Abschlußschicht mit einer effektiven Brechzahl von kleiner als 1,3 (für den Wellenlängenbereich, für den das reflexionsmindernde Interferenzschichtsystem ausgelegt ist) gebildet werden. Die effektive Brechzahl kann auch kleiner als 1,2 oder kleiner als 1,1 sein.

Als Material für die Abschlußschicht kann eine Fluoridschicht (beispielsweise MgF₂) oder eine Oxidschicht (z. B. SiO₂) verwendet werden.

Das Aufdampfen kann bei Raumtemperatur durchgeführt werden oder bei einer höheren Temperatur aus z.B. dem Bereich von 50°C - 300°C durchgeführt werden, wobei z. B. 150°C bei MgF₂ zu guten Ergebnissen führt.

Das Substrat kann insbesondere als transparentes Substrat ausgebildet sein. Ferner kann das Substrat ein optisches Element sein, wie z.B. eine Linse. Auch ist es möglich, daß die Oberfläche, auf die der Schichtstapel aufgebracht wird, plan ist oder gekrümmt ausgebildet ist.

In vorteilhafter Weise kann das erfindungsgemäße Verfahren in ein und derselben Beschichtungsanlage durchgeführt werden, in der auch die Schichten des Schichtstapels (z.B. unter Vakuum) aufgebracht werden. Dazu kann in der Beschichtungsanlage der Halter z.B. so ausgebildet sein, daß er kippbar ist. Da die Beschichtung in solchen Beschichtungsanlagen in der Regel unter Vakuum durchgeführt werden, ist also ein zusätzliches Ein- und Ausschleusen für die Bildung der nanoporösen Abschlußschicht nicht notwendig.

Bei dem erfindungsgemäßen Verfahren zur Herstellung eines reflexionsmindernden Interferenzschichtsystems kann die Brechzahl der nanoporösen Abschlußschicht insbesondere kleiner sein als die kleinste Brechzahl der Schichten des Schichtstapels.

Die Aufgabe wird ferner gelöst durch ein reflexionsminderndes Interferenzschichtsystem mit einem Schichtstapel mit mehreren Schichten, die abwechselnd hochbrechend und niedrigbrechend sind, und einer auf der obersten Schicht des Schichtstapels aufgebrachten nanoporösen Abschlußschicht, deren Brechzahl kleiner ist als die Brechzahl der obersten Schicht des Schichtstapels und die durch Aufdampfen des Materials der Abschlußschicht unter schrägem Winkel zur Normalen der obersten Schicht des Schichtstapels gebildet ist.

Mit einem reflexionsmindernden Interferenzschichtsystem können ausgezeichnete Entspiegelungseigenschaften bereitgestellt werden.

Bei dem reflexionsmindernden Interferenzschichtsystem können sowohl die Schichten des Schichtstapels als auch die Schicht der Abschlußschicht aus nicht-organischem Materialien gebildet sein.

Des weiteren kann die Abschlußschicht mit einer Schichtdicke im Bereich von 50 - 150 nm gebildet sein.

Die Abschlußschicht kann eine effektive Brechzahl von kleiner als 1,3, insbesondere kleiner als 1,2 und bevorzugt kleiner als 1,1 aufweisen.

Des weiteren kann bei dem erfindungsgemäßen reflexionsmindernden Interferenzschichtsystem die Brechzahl der nanoporösen Abschlußschicht kleiner sein als die kleinste Brechzahl der Schichten des Schichtstapels.

Es wird ferner bereitgestellt ein optisches Element mit einer Oberfläche, wobei auf der Oberfläche ein erfindungsgemäßes reflexionsminderndes Interferenzschichtsystem aufgebracht ist.

Das aufgebrachte reflexionsmindernde Interferenzschichtsystem kann die beschriebenen Weiterbildungen aufweisen.

Insbesondere kann das erfindungsgemäße Verfahren zur Herstellung eines reflexionsmindernden Interferenzschichtsystems so weitergebildet werden, daß das erfindungsgemäße reflexionsmindernde Interferenzschichtsystem (einschließlich seiner Weiterbildungen) herstellbar ist. Auch kann das erfindungsgemäße reflexionsmindernde Interferenzschichtsystem Merkmale aufweisen, die in Verbindung mit dem erfindungsgemäßen Herstellungsverfahren beschrieben sind.

Des weiteren wird ein Verfahren zur Herstellung eines reflexionsmindernden Interferenzschichtsystems bereitgestellt, bei dem ein Schichtstapel durch Aufbringen mehrerer Schichten auf eine Oberfläche eines Substrates, die abwechselnd hochbrechend und niedrigbrechend sind, gebildet wird und bei dem eine Abschlußschicht des Schichtstapels durch Bilden einer stochastischen Oberflächenreliefstruktur mittels Trockenätzen bei Selbstmaskierung so erzeugt wird, daß die Brechzahl der Abschlußschicht kleiner ist als die Brechzahl der obersten Schicht des Schichtstapels (bevorzugt kleiner als die kleinste Brechzahl der Schichten des Schichtstapels).

Bei diesem Verfahren kann die Abschlußschicht mit einer Brechzahl von kleiner als 1,3 (insbesondere für den Wellenlängenbereich, für den das reflexionsmindernde Interferenzschichtsystem ausgelegt ist) und/oder mit einer Dicke im Bereich von 30 bis 200 nm gebildet werden.

Des weiteren können die Schichten aus nicht organischem Materialien durch ein Vakuumbeschichtungsverfahren aufgebracht werden.

Des weiteren kann das Substrat ein optisches Element, wie z. B. eine Linse sein, wobei die Oberfläche, auf die der Schichtstapel aufgebracht ist, plan oder gekrümmt ausgebildet sein kann.

Dieses Verfahren zur Herstellung eines reflexionsmindernden Interferenzschichtsystems kann in gleicher Weise weitergebildet werden wie das bereits beschriebenen Verfahren zur Herstellung eines reflexionsmindernden Interferenzschichtsystems, bei dem die nanoporöse Abschlußschicht durch Aufdampfen des Materials unter schrägem Winkel gebildet wird.

Unter dem Schichtstapeln mit mehreren Schichten, die abwechselnd hochbrechend und niedrigbrechend sind, wird hier insbesondere verstanden, daß eine hochbrechende Schicht eine größere Brechzahl aufweist als die direkt benachbarte niedrigbrechende Schicht. Die hochbrechenden und niedrigbrechenden Schichten können jeweils Schichten aus dem gleichen Material sein. Es ist jedoch auch möglich, daß verschiedene niedrigbrechende Schichten aus verschiedenen Materialien gebildet sind und/oder daß verschiedene hochbrechende Schichten aus verschiedenen Materialien gebildet sind.

Als Material für eine niedrigbrechende Schicht kann beispielsweise MgF₂ mit einer Brechzahl von 1,38, SiO₂ mit einer Brechzahl von 1,46 und Al₂O₃ mit einer Brechzahl von 1,67 eingesetzt werden. Als Material für eine hochbrechende Schicht kann beispielsweise TiO₂ mit einer Brechzahl von 2,3 oder die Substanz H1 (Beschichtungsmaterial der Firma Merck) mit einer Brechzahl von 2,1 eingesetzt werden. Die angegebenen Brechzahlen beziehen sich auf den sichtbaren Spektralbereich.

Es versteht sich, daß die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

Nachfolgend wird die Erfindung beispielsweise anhand der beigefügten Zeichnungen, die auch erfindungswesentliche Merkmale offenbaren, noch näher erläutert. Es zeigen:
- Fig. 1: eine schematische Darstellung eines erfindungsgemäßen reflexionsmindernden Interferenzschichtsystems;
- Fig. 2: eine schematische Darstellung zur Erläuterung des Verfahrens zur Herstellung eines reflexionsmindernden Interferenzschichtsystems;
- Fig. 3: eine Darstellung des Reflexionsgrades des erfindungsgemäßen reflexionsmindernden Interferenzschichtsystems gemäß Fig. 1 im Vergleich zu einem herkömmlichen reflexionsmindernden Interferenzschichtsystem;
- Fig. 4: eine Darstellung des Reflexionsgrades eines weiteren erfindungsgemäßen reflexionsmindernden Interferenzschichtsystems im Vergleich zu einem herkömmlichen reflexionsmindernden Interferenzschichtsystem;
- Fig. 5: eine Darstellung des Reflexionsgrades eines weiteren erfindungsgemäßen reflexionsmindernden Interferenzschichtsystems im Vergleich zu einem herkömmlichen reflexionsmindernden Interferenzschichtsystem;
- Fig. 6: eine Darstellung des Reflexionsgrades eines weiteren erfindungsgemäßen reflexionsmindernden Interferenzschichtsystems im Vergleich zu einem herkömmlichen reflexionsmindernden Interferenzschichtsystem;
- Fig. 7: eine Darstellung des Reflexionsgrades eines weiteren erfindungsgemäßen reflexionsmindernden Interferenzschichtsystems im Vergleich zu einem herkömmlichen reflexionsmindernden Interferenzschichtsystem, und
- Fig. 8: eine Darstellung des Reflexionsgrades eines weiteren erfindungsgemäßen reflexionsmindernden Interferenzschichtsystems im Vergleich zu einem herkömmlichen reflexionsmindernden Interferenzschichtsystem.

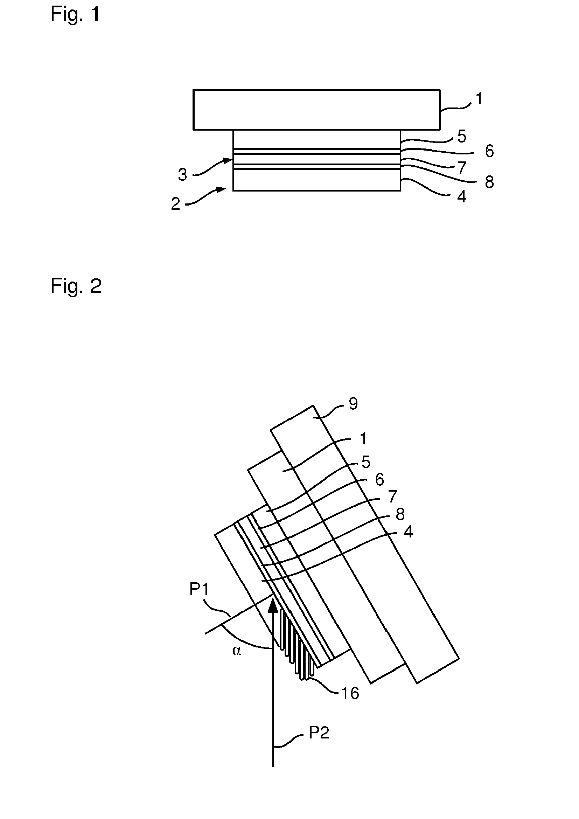

In Fig. 1 ist ein Substrat 1 mit einem erfindungsgemäßen reflexionsmindernden Interferenzschichtsystem 2 gezeigt, das einen Schichtstapel 3 und eine darauf gebildete nanoporöse Abschlußschicht 4 umfaßt. Das Substrat 1 ist transparent für Strahlung eines vorbestimmten Wellenlängenbereiches (z.B. 400 - 700 nm). So kann das Substrat z.B. aus Kunststoff oder Glas gebildet sein. Im hier beschriebenen Beispiel handelt es sich um Glas (z.B. BK7). Das Substrat 1 ist bevorzugt ein optisches Element (wie z.B. eine Linse), die zu entspiegeln ist.

Der Schichtstapel 3 weist vier Schichten 5, 6, 7, 8 auf, die abwechselnd hochbrechend und niedrigbrechend sind. Es handelt sich bei den Schichten 5 und 7 jeweils um eine Al₂O₃-Schicht (niedrigbrechend) und bei den Schichten 6 und 8 um eine H1-Schicht (H1 ist ein Beschichtungsmaterial der Firma Merck), wobei die H1-Schichten die hochbrechenden Schichten sind. Die Schichtdicken der Schichten 5 bis 8 betragen 91,1 nm, 24,1 nm, 52,4 nm sowie 21,2 nm.

Auf diesem Schichtstapel und somit auf der vierten Schicht 8 ist die nanoporöse Abschlußschicht 4 gebildet. Die nanoporöse Abschlußschicht weist Poren auf, deren Ausdehnung so gering ist, daß sie von der einfallenden Strahlung, für das das Interferenzschichtsystem 2 ausgelegt ist, nicht aufgelöst werden kann. So können die Poren insbesondere eine maximale Ausdehnung von kleiner als einige 10 nm aufweisen. Für die einfallende Strahlung weist daher die nanoporöse Abschlußschicht 4 eine effektive Brechzahl auf, die geringer ist als die Brechzahl des Materials zur Herstellung der nanoporösen Abschlußschicht 4, da in den Poren meistens Luft ist, dessen Brechzahl stets kleiner ist als die des Materials für die Abschlußschicht 4.

Die nanoporöse Abschlußschicht 4 ist hier aus MgF₂ gebildet und weist eine Dicke von 107,3 nm auf, wobei die nanoporöse Abschlußschicht 4 durch Aufdampfen von MgF₂ unter einem schrägen Winkel zur Normalen P1 der vierten Schicht 8 gebildet wurde. Dies ist schematisch in Fig. 2 dargestellt. Das Substrat 1 mit dem Schichtstapel 3 ist auf einem Träger 9 befestigt, der gegenüber der Aufdampfrichtung (durch Pfeil P2 angedeutet) des Materials für die nanoporöse Abschlußschicht 4 so geneigt ist, daß der Aufdampfwinkel α ca. 60° beträgt. Der Aufdampfwinkel α kann im Bereich von mindestens 55° und kleiner als 75° liegen.

Dadurch werden, wie in Fig. 2 schematisch angedeutet ist, säulenartige Strukturen 16 gebildet, die aufgrund des schrägen Aufdampfwinkels gegenüber der Normalen der vierten Schicht 8 geneigt sind. Die Darstellung in den Fig. 1 und 2 ist nicht maßstabstreu, um die Erfindung besser erläutern zu können.

Ein solches Aufdampfen unter schrägem Winkel ist z.B. das sogenannte GLAD-Verfahren (GLancing Angle Deposition).

Wenn, wie bei dem hier beschriebenen Beispiel, der Schichtstapel 3 gegenüber der Aufdampfrichtung P2 während des Aufdampfens des Materials für die nanoporöse Abschlußschicht 4 nicht verändert wird und auch der Schichtstapel 3 nicht bewegt wird, weist die nanoporöse Abschlußschicht 4 die beschriebene säulenartige Nanostruktur auf. In diesem Fall kann die nanoporöse Abschlußschicht 4 auch als kolumnare Dünnschicht bezeichnet werden. Eine solche kolumnare Dünnschicht ist in Fig. 2 schematisch dargestellt.

Natürlich ist es auch möglich, den Schichtstapel 3 während des Aufdampfens des Materials für die nanoporöse Abschlußschicht 4 zu drehen und/oder translatorisch zu bewegen, so daß sich die säulenartigen Nanostrukturen nicht geradlinig erstrecken, sondern andere Formen aufweisen können, wie z.B. eine schraubenförmige Struktur, Säulen, die sich zick-zack-förmig erstrecken, quadratische Spiralen, etc.

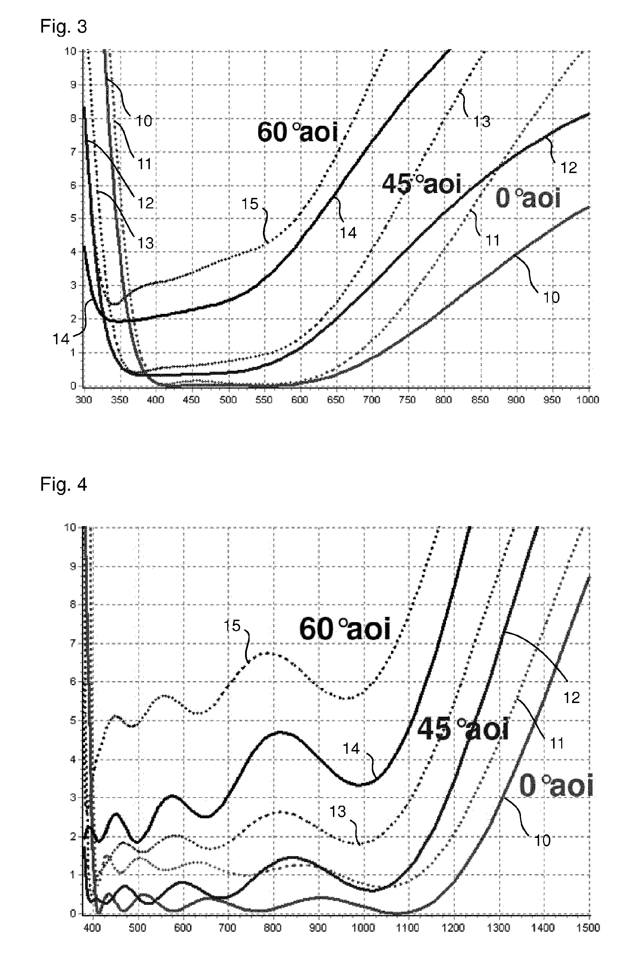

In Fig. 3 ist der Reflexionsgrad in Prozent gegenüber der Wellenlänge der einfallenden unpolarisierten Strahlung für drei verschiedene Einfallswinkel (60°aoi = Einfallswinkel von 60°; 45°aoi = Einfallswinkel von 45° und 0°aoi = Einfallswinkel von 0°) dargestellt, wobei der Reflexionsgrad auf der Ordinate und die Wellenlänge in nm auf der Abszisse aufgetragen sind. Die Kurve 10 zeigt den Reflexionsgrad des reflexionsmindernden Interferenzschichtsystems 2 gemäß Fig. 1 in % bei einem Einfallswinkel von 0° im Vergleich zu dem Reflexionsgrad eines herkömmlichen reflexionsmindernden Interferenzschichtsystems, das als Kurve 11 dargestellt ist. Das herkömmliche Interferenzschichtsystem weist die gleiche Schichtfolge wie das Schichtsystem gemäß Fig. 1 mit dem Unterschied auf, daß die Abschlußschicht bei dem herkömmlichen Interferenzschichtsystem nicht als nanoporöse Abschlußschicht ausgebildet ist, sondern als normale MgF₂-Schicht, die z. B. eine Brechzahl von größer als 1,35 im sichtbaren Wellenlängenbereich aufweist. Wie aus einem Vergleich der Kurven 10 und 11 (die Bezugszeichen 10 und 11 sind mehrmals eingezeichnet, um klarzustellen, welcher Verlauf zu welcher Kurve gehört) zeigt, weist das erfindungsgemäße Interferenzschichtsystem 2 einen kleineren und somit einen verbesserten Reflexionsgrad auf.

Die Kurve 12 zeigt den Reflexionsgrad des reflexionsmindernden Interferenzschichtsystems 2 gemäß Fig. 1 in % für einen Einfallswinkel von 45° und die Kurve 14 zeigt den Reflexionsgrad des reflexionsmindernden Interferenzschichtsystems gemäß Fig. 1 in % für einen Einfallswinkel von 60°. Die Kurven 13 und 15 zeigen in gleicher Weise wie die Kurve 11 den Reflexionsgrad eines herkömmlichen reflexionsmindernden Interferenzschichtsystems, wobei die Kurve 13 für einen Einfallswinkel von 45°und die Kurve 15 für einen Einfallswinkel von 60 ° zeigt.

Somit werden mit dem erfindungsgemäßen reflexionsmindernden Interferenzschichtsystem 2 selbst bei hohen Einfallswinkeln des Lichtes ausgezeichnete Entspiegelungseigenschaften erreicht.

In Fig. 4 ist in gleicher Weise wie in Fig. 3 der Reflexionsgrad in Abhängigkeit der Wellenlänge des einfallenden unpolarisierten Lichtes für ein erfindungsgemäßes Interferenzschichtsystem (Kurve 10, 12 und 14) für Einfallswinkel von 0°, 45° und 60° im Vergleich mit einem entsprechenden herkömmlichen Interferenzschichtsystem (Kurve 11, 13 und 15) gezeigt. Der Aufbau des erfindungsgemäßen Interferenzschichtsystems ist in nachfolgender Tabelle 1 angegeben. Daraus ergibt sich, daß auf dem Substrat 1 der Schichtstapel 3 mit neun Schichten gebildet ist und auf diesem als zehnte Schicht die nanoporöse Abdeckschicht gebildet ist.

| Schicht-Nr. | Schichtmaterial | Schichtdicke (nm) |
|---|---|---|
| | Substrat 1 | |
| 1 | TiO₂ | 11,2 |
| 2 | SiO₂ | 45,9 |
| 3 | TiO₂ | 28,2 |
| 4 | SiO₂ | 19,1 |
| 5 | TiO₂ | 125,9 |
| 6 | SiO₂ | 14,1 |
| 7 | TiO₂ | 23,3 |
| 8 | SiO₂ | 44,5 |
| 9 | TiO₂ | 11,1 |
| 10 | MgF₂ | 124,4 |

Der Reflexionsgrad gemäß Kurven 11, 13 und 15 entspricht dem eines herkömmlichen Interferenzschichtsystems für die Einfallswinkel 0°, 45° und 60°, das in gleicher Weise wie das erfindungsgemäße Interferenzschichtsystem zehn Schichten aufweist, wobei jedoch die letzte Schicht nicht als nanoporöse Abschlußschicht ausgebildet ist, sondern als normale MgF₂-Dünnschicht.

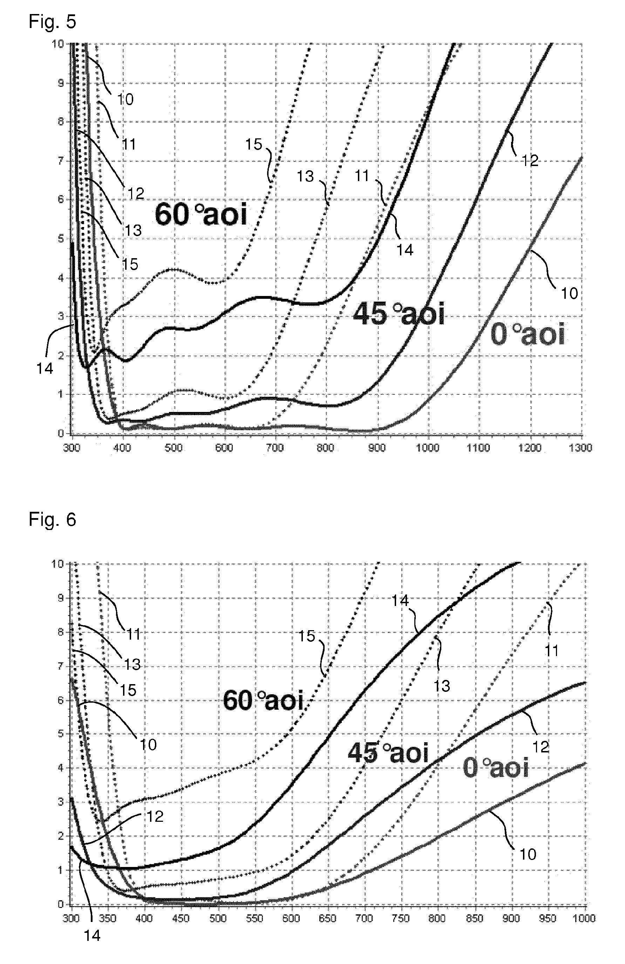

In Fig. 5 ist der Reflexionsgrad für eine weitere Ausführungsform des erfindungsgemäßen Interferenzschichtsystems 2 in gleicher Weise wie in Fig. 2 im Vergleich zu einem herkömmlichen Interferenzschichtsystem gezeigt, bei der die Abschlußschicht keine nanoporöse MgF₂-Schicht ist, sondern nur eine herkömmliche MgF₂-Schicht. Der Aufbau des Interferenzschichtsystems gemäß dieser Ausführungsform ist in der nachfolgenden Tabelle angegeben:

| Schicht-Nr. | Schichtmaterial | Schichtdicke (nm) |
|---|---|---|
| | Substrat 1 | |
| 1 | Al₂O₃ | 79,3 |
| 2 | H1 | 20,6 |
| 3 | MgF₂ | 14,7 |
| 4 | H1 | 138,1 |
| 5 | MgF₂ | 28,4 |
| 6 | H1 | 22,4 |
| 7 | MgF₂ | 116,2 |

In Fig. 6 ist der Reflexionsgrad für ein erfindungsgemäßes Interferenzschichtsystem in gleicher Weise wie in Fig. 3 dargestellt. Der Aufbau des Interferenzschichtsystems entspricht dabei dem Aufbau gemäß Fig. 1, wobei jedoch die Abschlußschicht 4 nicht durch schräges Aufdampfen gebildet ist, sondern eine stochastische Oberflächenreliefstruktur aufweist, die durch Trockenätzen bei Selbstmaskierung erzeugt ist. Unter Selbstmaskierung wird hierbei der Vorgang verstanden, daß sich auf der Oberfläche Atome und/oder Moleküle anlagern und/oder Verbindungen ausbilden, die wie eine statistisch verteilte Ätzmaskierung vor Materialabtrag schützen. Ihre maskierende Eigenschaft beruht auf einer geringeren Ätzrate im Vergleich zu der des Materials der Schicht. Aufgrund der unregelmäßigen Anordnung kommt es dann zu einem lokal unterschiedlich hohen Materialabtrag und somit zu der gewünschten Oberflächenstrukturierung. Eine solche Selbstmaskierung tritt z.B. bei reaktiven Trockenätzen in fluorhaltigen Plasmen auf.

Die Schichtdicken der ersten bis vierten Schicht betragen bei dem hier beschriebenen Beispiel 93,8 nm, 15,6 nm, 71,5 nm und 5,0 nm. Die Abschlußschicht 4 ist eine SiO₂-Schicht mit einer Dicke von 163,8 nm, wobei die beschriebene Oberflächenreliefstruktur vorliegt. Damit weist auch in diesem Fall die Abschlußschicht eine effektive Brechzahl auf, die geringer ist als die Brechzahl des Materials aus dem die Abschlußschicht gebildet ist, da die Strukturierung nur solche Abmessungen aufweist, die die Strahlung, für das das erfindungsgemäße Interferenzschichtsystem 2 ausgelegt ist, nicht auflösen kann.

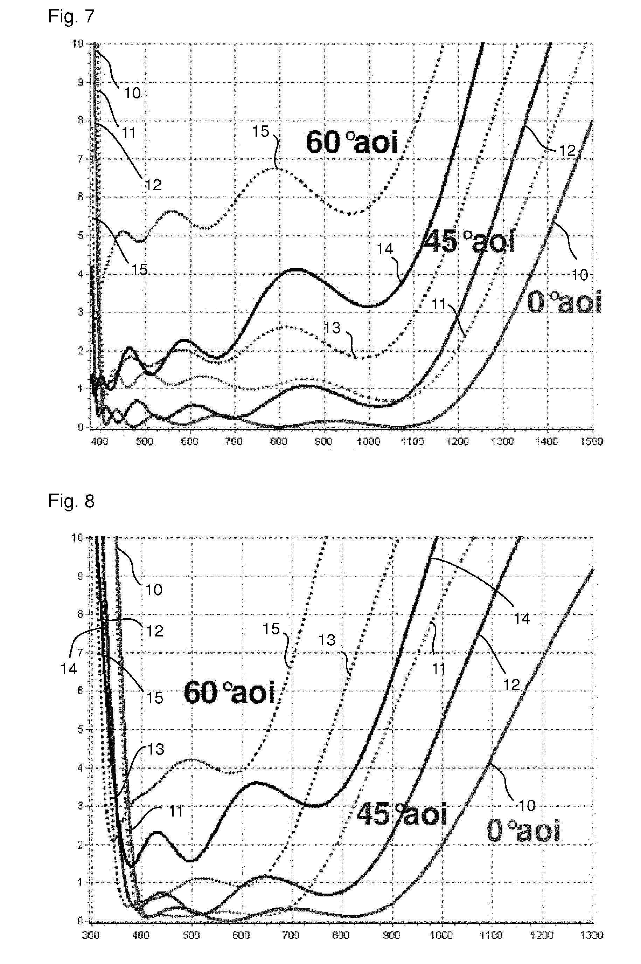

In Fig. 7 ist der Reflexionsgrad für eine weitere Ausführungsform des erfindungsgemäßen Interferenzschichtsystems 2 in gleicher Weise wie in Fig. 4 dargestellt, wobei das Interferenzschichtsystem gemäß Fig. 7 eine sehr ähnliche Schichtfolge aufweist wie das Interferenzschichtsystem gemäß Fig. 2, wie der nachfolgenden Tabelle entnommen werden kann. Des weiteren ist die abschließende SiO₂-Schicht in gleicher Weise wie bei dem erfindungsgemäßen Interferenzschichtsystem gemäß Fig. 6 mit einer stochastischen Oberflächenreliefstruktur ausgebildet.

| Schicht-Nr. | Schichtmaterial | Schichtdicke (nm) |
|---|---|---|
| | Substrat 1 | |
| 1 | TiO₂ | 11,4 |
| 2 | SiO₂ | 45,9 |
| 3 | TiO₂ | 29,4 |
| 4 | SiO₂ | 18,9 |
| 5 | TiO₂ | 139,5 |
| 6 | SiO₂ | 24,0 |
| 7 | TiO₂ | 18,8 |
| 8 | SiO₂ | 71,4 |
| 9 | SiO₂ | 163,8 |

In Fig. 8 ist der Reflexionsgrad in gleicher Weise wie in Fig. 5 für ein ähnliches erfindungsgemäßes Interferenzschichtsystem gezeigt, wobei das Interferenzschichtsystem gemäß Fig. 8 die gleiche Schichtfolge aufweist wie das Interferenzschichtsystem gemäß Fig. 5. Lediglich die Schichtdicken variieren und die abschließende SiO₂-Schicht ist wiederum mit einer stochastischen Oberflächenreliefstruktur ausgebildet. Die Schichtdicken sowie die Schichtfolge sind in der nachfolgenden Tabelle angegeben:

| Schicht-Nr. | Schichtmaterial | Schichtdicke (nm) |
|---|---|---|
| | Substrat 1 | |
| 1 | Al₂O₃ | 42,0 |
| 2 | H1 | 19,6 |
| 3 | MgF₂ | 18,8 |
| 4 | H1 | 145,6 |
| 5 | MgF₂ | 33,3 |
| 6 | H1 | 14,8 |
| 7 | SiO₂ | 163,8 |

Wie allen Figuren 3 bis 8 zu entnehmen ist, weisen die Ausführungsformen des erfindungsgemäßen Interferenzschichtsystems ausgezeichnete Entspiegelungseigenschaften über einen großen Bereich von Einfallswinkeln (insbesondere auch bei hohen Einfallswinkeln) auf.

Das erfindungsgemäße reflexionsmindernde Interferenzschichtsystem 2 ist insbesondere für eine sehr breitbandige Entspiegelung von Vorteil, da gerade im Bereich von g ≥ 2 (g ist das Verhältnis von der obersten Wellenlänge zu der untersten Wellenlänge des Spektralbereiches, für das das Interferenzschichtsystem ausgelegt ist) deutliche Verbesserungen bei der Entspiegelung erzielt werden können. Insbesondere bei einem g-Wert von bis zu 3 können deutliche Verbesserungen erzielt werden.

Das erfindungsgemäße Interferenzschichtsystem kann nicht nur, wie bisher beschrieben, auf eine plane Fläche des Substrates 1 aufgebracht werden. Das Substrat 1 kann z.B. eine Linse mit einer gekrümmten Fläche sein, auf die dann das reflexionsmindernde Interferenzschichtsystem 2 aufgebracht wird. Als Material für das Substrat 1 kann z. B. BK7 verwendet werden.

Die Schichten des erfindungsgemäßen Interferenzschichtsystems sind bevorzugt anorganische Schichten bzw. anorganische Mischmedien.

Das Vorsehen der niedrigbrechenden nanoporösen Abschlußschicht 4 führt erfindungsgemäß zu einer signifikanten Verbesserung der Entspiegelungswirkung. Insbesondere können Verbesserungen neben des bereits beschriebenen breiteren Spektralbereichs durch eine verbesserte Winkelakzeptanz erzielt werden. Auch bei nicht senkrechtem Einfall der Strahlung wird die Entspiegelungswirkung im Vergleich zu herkömmlichen Entspiegelungsbeschichtungen verbessert.

## Patentansprüche

1. Verfahren zur Herstellung eines reflexionsmindernden Interferenzschichtsystems mit den Schritten
Bilden eines Schichtstapels durch Aufbringen mehrerer Schichten auf eine Oberfläche eines Substrates, die abwechselnd hochbrechend und niedrigbrechend sind, und
Aufbringen einer nanoporösen Abschlußschicht auf den Schichtstapel durch Aufdampfen des Materials der Abschlußschicht unter schrägem Winkel zur Normalen der obersten Schicht des Schichtstapels derart, daß die Brechzahl der Abschlußschicht kleiner ist als die Brechzahl der obersten Schicht des Schichtstapels.

2. Verfahren nach Anspruch 1, bei dem das Material der Abschlußschicht unter einem schrägen Winkel von größer oder gleich 60° aufgedampft wird.

3. Verfahren nach Anspruch 1 oder 2, bei dem der Schichtstapel während des Aufdampfens des Materials der Abschlußschicht nicht bewegt wird.

4. Verfahren nach Anspruch 1 oder 2, bei dem der Schichtstapel während des Aufdampfens des Materials der Abschlußschicht bewegt wird.

5. Verfahren nach einem der obigen Ansprüche, bei dem sowohl die Schichten des Schichtstapels als auch die Schicht der Abschlußschicht aus nicht organischen Materialien gebildet werden.

6. Verfahren nach einem der obigen Ansprüche, bei dem die Abschlußschicht mit einer Schichtdicke im Bereich von 30 - 200 nm gebildet wird.

7. Verfahren nach einem der obigen Ansprüche, bei dem die Abschlußschicht mit einer effektiven Brechzahl von kleiner als 1,3 gebildet wird.

8. Verfahren nach einem der obigen Ansprüche, bei dem als Material für die Abschlußschicht eine Fluoridschicht oder eine Oxidschicht verwendet wird.

9. Reflexionsminderndes Interferenzschichtsystem mit
einem Schichtstapel mit mehreren Schichten, die abwechselnd hochbrechend und niedrigbrechend sind, und
einer auf der obersten Schicht des Schichtstapels aufgebrachten nanoporösen Abschlußschicht, deren Brechzahl kleiner ist als die Brechzahl der obersten Schicht des Schichtstapels und die durch Aufdampfen des Materials der Abschlußschicht unter schrägem Winkel zur Normalen der obersten Schicht des Schichtstapels gebildet ist.

10. Optisches Element mit einer Oberfläche, wobei auf der Oberfläche ein reflexionsminderndes Interferenzschichtsystem gemäß Anspruch 9 aufgebracht ist.

11. Verfahren zur Herstellung eines reflexionsmindernden Interferenzschichtsystems mit den Schritten
Bilden eines Schichtstapels durch Aufbringen mehrerer Schichten auf eine Oberfläche eines Substrates, die abwechselnd hochbrechend und niedrigbrechend sind, und
Erzeugen einer eine Nanostruktur aufweisenden Abschlußschicht des Schichtstapels durch Bilden einer stochastischen Oberflächenreliefstruktur mittels Trockenätzen bei Selbstmaskierung derart, daß die Brechzahl der Abschlußschicht kleiner ist als die Brechzahl der obersten Schicht des Schichtstapels.

12. Verfahren nach Anspruch 11, bei dem die Abschlußschicht mit einer effektiven Brechzahl von kleiner als 1,3 gebildet wird und/oder bei dem die Abschlußschicht mit einer Schichtdicke im Bereich von 30 - 200 nm gebildet wird.

13. Verfahren nach Anspruch 11 oder 12, bei dem die Schichten aus nicht organischen Materialien durch ein Vakuumbeschichtungsverfahren aufgebracht werden.

14. Verfahren nach einem der Ansprüche 1 bis 8 oder 11 bis 13, bei dem als Substrat ein Glassubstrat verwendet wird.

15. Verfahren nach einem der Ansprüche 1 bis 8 oder 11 bis 14, bei dem als Substrat ein optisches Element verwendet wird.
